# EUROPEAN PATENT APPLICATION

(11) **EP 3 305 443 A1**
(43) Date of publication of application: **11.04.2018**
(21) Application number: 16807283.3
(22) Date of filing: 25.05.2016
(51) Int. Cl.: B22F 1/00, B01J 2/14, B01J 2/28, B22F 1/02, H01F 1/26, H01F 41/02

(54) **GRANULATED POWDER AND METHOD FOR MANUFACTURING GRANULATED POWDER**

(30) Priority: 08.06.2015 JP 2015115670
(71) Applicant: Sumitomo Electric Industries, Ltd., Osaka-shi, Osaka 541-0041 (JP); Sumitomo Electric Sintered Alloy, Ltd., Takahashi-shi, Okayama 716-0192 (JP)
(72) Inventor: ISHIMINE, Tomoyuki, Itami-shi Hyogo 664-0016 (JP)
(74) Representative: Boult Wade Tennant
(86) International application number: PCT/JP2016/065457
(87) International publication number: WO 2016/199576

(57) **Abstract**

Provided is a granulated powder including a plurality of metal particles, a binder resin for binding the plurality of metal particles together, and a thickener that is contained in the binder resin and increases the viscosity of the binder resin.

## Description

### Technical Field

The present disclosure relates to a granulated powder and to a method for manufacturing the granulated powder. The present application claims priority from Japanese Patent Application No. 2015-115670 filed on June 8, 2015, and the entire contents of this Japanese Patent Application are incorporated by reference in the present application.

### Background Art

In one previously disclosed technique, a molding resin and a soft magnetic powder composed of a plurality of soft magnetic particles coated with an insulating layer are mixed and integrated to form a granulated powder (see, for example, PTL 1).

### Citation List

### Patent Literature

PTL 1: Japanese Unexamined Patent Application Publication No. 2012-107330

### Summary of Invention

The granulated powder according to the present disclosure comprises: a plurality of metal particles; a binder resin for binding the plurality of metal particles together; and a thickener resin that is contained in the binder resin and increases the viscosity of the binder resin. The granulated powder manufacturing method according to the present disclosure comprises a granulating step of granulating a plurality of metal particles using a binder resin. The binder resin contains a thickener that increases the viscosity of the binder resin. In the granulating step, the plurality of metal particles are rotated and tumbled under heating, and a solution containing the binder resin is sprayed onto the plurality of tumbling metal particles.

### Brief Description of Drawings

[Fig. 1] Figure 1 is a schematic cross-sectional view showing a granulated powder according to an embodiment.
[Fig. 2] Figure 2 is a schematic cross-sectional view showing a coated metal particle according to an embodiment.

### Description of Embodiments

An electromagnetic component including a coil of a wound wire and a dust core in which the coil is disposed and which forms a closed magnetic circuit is used as a component included in an energy conversion circuit such as a switching power supply or a DC/DC converter. In recent years, to achieve downsizing of electromagnetic components, their switching frequency is being increased, and it is desired that dust cores used for electromagnetic components have excellent high-frequency responsiveness. One method for improving the high-frequency responsiveness of a dust core is to reduce the size of soft magnetic particles forming the dust core. However, when the soft magnetic particles are reduced in size, the flowability of the powder deteriorates, and the fillability of the powder into a die in a pressurization step deteriorates significantly.

This has led to the desire for a granulated powder that includes a plurality of metal particles bound with high binding strength and has excellent flowability. One conceivable method to increase the binding strength between the metal particles is to increase the concentration of the binder resin in a solution to thereby increase its viscosity. Generally, when a granulated powder is manufactured, a solution is sprayed such that the content of the binder resin per unit volume of the metal particles is constant. Therefore, when the concentration of the binder resin in the solution is high, the amount of the solution sprayed is small. In this case, the binder resin may not be uniformly distributed in the soft magnetic powder. Therefore, the metal particles may not be granulated sufficiently, or the grain size distribution may be non-uniform, so that the granulated powder may have poor flowability.

To manufacture a granulated powder that includes a plurality of metal particles bound with high binding strength and has excellent flowability without changing the content of the binder resin per unit volume of the metal particles, the present inventor has conducted extensive studies on the method for manufacturing the granulated powder and found the following. When the binder resin contains a specific material, the viscosity of the binder resin is increased to allow the binder resin to be uniformly distributed around the plurality of metal particles without increasing the concentration of the binder resin in the solution, i.e., without changing the total amount of the solution sprayed onto the plurality of metal particles. This allows a granulated powder having higher flowability than conventional granulated powders to be manufactured. The present invention is based on the above findings.
(1) The granulated powder according to the present disclosure comprises: a plurality of metal particles; a binder resin for binding the plurality of metal particles; and a thickener that is contained in the binder resin and increases the viscosity of the binder resin.
   In the above granulated powder, the binder resin contains the thickener. In this case, the viscosity of the binder resin is increased, and the binding strength between the plurality of metal particles is increased, so that excellent flowability is obtained. Therefore, this granulated powder can be preferably used as constituent materials of general structural components (sintered components) and dust cores that are manufactured, for example, through a process including filling the granulated powder into a molding die and subjecting the resulting granulated powder to compression molding.
(2) In one aspect of the granulated powder, the metal particles have an average particle diameter of 10 µm or more.
   When the metal particles used are large metal particles having an average particle diameter of 10 µm or more and a large mass, it is difficult to increase the binding strength using only the binder resin. However, since the viscosity of the binder resin containing the thickener can be easily increased, the binding strength between the metal particles can be high, and excellent flowability is obtained.
(3) In another aspect of the granulated powder, a constituent material of the metal particles is a material having a specific gravity equal to or larger than the specific gravity of magnesium.
   When the metal particles used are heavy metal particles having a high specific gravity equal to or larger than the specific gravity of magnesium, it is difficult to increase the binding strength using only the binder resin. However, since the viscosity of the binder resin containing the thickener can be easily increased, the binding strength can be high, and excellent flowability is obtained.
(4) In another aspect of the granulated powder, the thickener includes at least one material selected from polysaccharides, layered compounds, fatty acid metal salts, and ultrafine particulate materials having a diameter of 1 µm or less.
   In the above granulated powder, the viscosity of the binder resin can be easily increased, so that the plurality of metal particles are unlikely to be disaggregated.
(5) In another aspect of the granulated powder, the content of the binder resin with respect to the mass of the granulated powder is from 0.1% by mass to 2.0% by mass inclusive.
   When the content of the binder resin is 0.1% by mass or more, a plurality of metal particles are easily bound together sufficiently, and the granulated powder obtained can easily have high binding strength. When the content of the binder resin is 2.0% by mass or less, the amount of the binder resin is unlikely to be excessive.
(6) In another aspect of the granulated powder, when the content of the binder resin is within the range in (5) above, the content of the thickener with respect to the mass of the binder resin is from 0.01% by mass to 50.0% by mass inclusive.
   When the content of the thickener is 0.01% by mass or more, the viscosity of the binder resin can be easily increased. When the content of the thickener is 50.0% by mass or less, a shortage of the binder resin is unlikely to occur, and the plurality of metal particles can be easily bound together. In addition, an excessive increase in the viscosity of the binder resin can be prevented, and the granulated powder can be easily handled.
(7) In another aspect of the granulated powder, the binder resin is one selected from polyvinyl alcohol, polyvinyl butyral, and acrylic resin.
   In the above granulated powder, the binding strength between the plurality of metal particles can be easily increased, so that the plurality of metal particles can be easily aggregated.
(8) In another aspect of the granulated powder, the granulated powder further comprises an insulating layer that externally covers each of the metal particles.
   The above granulated powder can be preferably used as a constituent material of a dust core of an electromagnetic component including the dust core and a coil. This is because of the following reason. When the granulated powder including the insulating layer is used to manufacture the dust core, the insulation between the particles can be improved, so that an increase in loss (e.g., eddy-current loss) can be easily prevented.
(9) The granulated powder manufacturing method according to the present disclosure comprises a granulating step of granulating a plurality of metal particles using a binder resin. The binder resin contains a thickener that increases the viscosity of the binder resin. In the granulating step, the plurality of metal particles are rotated and tumbled under heating, and a solution containing the binder resin is sprayed onto the plurality of tumbling metal particles.
   With the above manufacturing method, a granulated powder that includes a plurality of metal particles bound with high binding strength and has excellent flowability can be manufactured. This is because of the following reason. When the binder resin contains the thickener, the binding strength between the plurality of metal particles can be increased by the binder resin without changing the content of the binder resin per unit volume of the metal particles, i.e., without reducing the amount of the solution sprayed onto the plurality of metal particles by increasing the concentration of the binder resin in the solution. Therefore, a granulated powder having a uniform grain size distribution and a large grain size can be easily formed.
   In the granulating step, after the sprayed solution adheres to the surface of the metal particles, the solvent in the adhering solution is rapidly removed by drying under heating. The plurality of metal particles are granulated with the binder resin, and the granulated powder can thereby be manufactured. It is difficult to increase the binding strength between metal particles with a large specific gravity and the binding strength between metal particles with a large particle diameter using only the binder resin. However, since the viscosity of the binder resin containing the thickener can be easily increased, a granulated powder with high binding strength and excellent flowability can be manufactured.
(10) In one aspect of the granulated powder manufacturing method, in the granulating step, the temperature of the metal particles is from 30°C to 150°C inclusive, the number of revolutions is from 50 rpm to 1,000 rpm inclusive, and time is from 10 minutes to 300 minutes inclusive.

With the above manufacturing method, the sprayed solution can easily adhere to the plurality of metal particles uniformly, and the solution adhering to the surface of the metal particles can be easily and rapidly dried. Therefore, a granulated powder having a uniform grain size distribution and a large grain size can be easily formed.

### [1. Details of embodiments]

The details of embodiments will next be described. First, a granulated powder according to an embodiment will be described. Next, a method for manufacturing the granulated powder will be described.

### [2. Granulated powder]

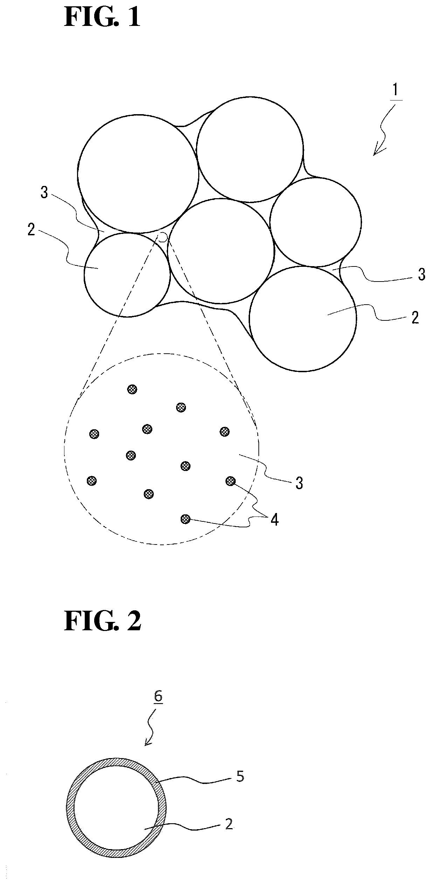

Referring to Figure 1, a granulated powder 1 includes a plurality of metal particles 2 and a binder resin for binding the plurality of metal particles 2 together. A main feature of the granulated powder 1 is that the granulated powder 1 includes a thickener 4 that is contained in the binder resin 3 and increases the viscosity of the binder resin 3. In Figure 1, the thickener 4 is exaggerated for the purpose of illustration.

### [2.-1 Metal particles]

### [2.-1-1 Material]

No particular limitation is imposed on the constituent material of the metal particles 2 included in the granulated powder 1, and an appropriate material may be selected according to the intended application of the granulated powder. Preferably, the constituent material of the metal particles 2 is a metal material having a specific gravity equal to or larger than the specific gravity of magnesium (Mg). Examples of the constituent material of the metal particles 2 include: pure iron (Fe) and iron alloys; aluminum (Al) and Al alloys; Mg and Mg alloys; and copper (Cu) and copper alloys. A granulated powder including metal particles 2 formed of pure iron (Fe) or an iron alloy can be preferably used as constituent materials of general structural components (sintered components) and a constituent material of a dust core of an electromagnetic component including the dust core and a coil.

When the granulated powder 1 is used to manufacture a dust core, it is preferable that the metal particles 2 are formed of pure iron. Examples of the iron alloy used when the granulated powder 1 is used to manufacture a dust core include Fe-Si-based alloys, Fe-Al-based alloys, Fe-N-based alloys, Fe-Ni-based alloys, Fe-C-based alloys, Fe-B-based alloys, Fe-Co-based alloys, Fe-P-based alloys, Fe-Ni-Co-based alloys, and Fe-Al-Si-based alloys.

Examples the iron alloy used when the granulated powder 1 is used to manufacture a general structural component such as a machine component include stainless steel, Fe-C-based alloys, Fe-Cu-Ni-Mo-based alloys, Fe-Ni-Mo-Mn-based alloys, Fe-P-based alloys, Fe-Cu-based alloys, Fe-Cu-C-based alloys, Fe-Cu-Mo-based alloys, Fe-Ni-Mo-Cu-C-based alloys, Fe-Ni-Cu-based alloys, Fe-Ni-Mo-C-based alloys, Fe-Ni-Cr-based alloys, Fe-Ni-Mo-Cr-based alloys, Fe-Cr-based alloys, Fe-Mo-Cr-based alloys, Fe-Cr-C-based alloys, Fe-Ni-C-based alloys, and Fe-Mo-Mn-Cr-C-based alloys.

### [2.-1-2 Particle diameter]

The particle diameter of the metal particles 2 may be appropriately selected according to the material of the metal particles 2 and the intended application of the granulated powder 1 and is preferably, for example, 10 µm or more. When the metal particles 2 used are large metal particles having an average particle diameter of 10 µm or more and a large mass, it is difficult to increase the binding strength using the binder resin 2. However, since the viscosity of the binder resin 3 containing the thickener 4 can be easily increased, the granulated powder 1 can have high binding strength and excellent flowability. The average particle diameter of the metal particles 2 is particularly preferably 20 µm or more. The upper limit of the average particle diameter of the metal particles 2 is preferably 500 µm or less and particularly preferably 300 µm or less.

When the metal particles 2 are formed of pure iron (Fe) or an iron alloy and the granulated powder 1 is used to manufacture a dust core, the average particle diameter of the metal particles 2 is preferably about 10 µm or more and about 500 µm or less. When the average particle diameter is within the above range, the following effects are obtained: The hysteresis loss of the dust core can be reduced, and its eddy-current loss can be reduced even when the dust core is used at a high frequency. The average particle diameter is more preferably from 10 µm to 300 µm inclusive and particularly preferably from 20 µm to 100 µm inclusive. When the granulated powder 1 is used to manufacture a powder compact for a general structural component, the average particle diameter is preferably about 30 µm or more and about 300 µm or less. The effect expected in this case is that high shape and dimensional accuracy and high strength can be achieved simultaneously. The average particle diameter is more preferably from 50 µm to 200 µm inclusive and particularly preferably from 50 µm to 100 µm inclusive.

When the metal particles 2 are formed of Al, an Al alloy, Mg, an Mg alloy, Cu, or a Cu alloy, the average particle diameter of the metal particles 2 is preferably from 30 µm to 300 µm inclusive, more preferably from 50 µm to 200 µm inclusive, and particularly preferably 50 µm to 100 µm inclusive, as in the case where pure iron (Fe) or an iron alloy is used to manufacture a powder compact for a general structural component. In this case, as in the above case, the effect expected is that high shape and dimensional accuracy and high strength can be achieved simultaneously.

The average particle diameter of the metal particles 2 can be measured by acquiring a cross sectional image under an SEM (scanning electron microscope) and analyzing the image using commercial image analysis software. In this case, the circle-equivalent diameters of the particles are used as their particle diameters. The circle-equivalent diameter of a particle is obtained as follows. The outline of the particle is determined, and the diameter of a circle having the same area as the area S surrounded by the outline is used as the circle-equivalent diameter. Specifically, the circle-equivalent diameter is represented by 2×{area S surrounded by outline/π}^{1/2}. To obtain cross sections of metal particles 2, a compact prepared by subjecting the granulated powder 1 to compression molding is heat-treated to produce a heat-treated product from which the binder resin 3 has substantially disappeared. Then a cross section of the heart-treated product is obtained.

The metal particles 2 may be composed only of particles (a bare powder). However, referring to Figure 2, the metal particles 2 may be coated metal particles 6 including an insulating layer 5 covering their outer circumference, but this depends on the material of the metal particles 2 and the intended application of the granulated powder 1. For example, when the metal particles 2 are formed of pure iron or an iron alloy, the insulating layer 5 provided allows the granulated powder 1 to be preferably used as a constituent material of a dust core of an electromagnetic component including the dust core and a coil. This is because of the following reason. The insulating layer provided increases the electrical resistance of the dust core. Therefore, when the electromagnetic component is used in a medium-to-high frequency range, its eddy-current loss can be reduced.

### [2.-1-3 Insulating layer]

Examples of the constituent material of the insulating layer 5 include silicate compounds containing Si, O, and at least one of alkali metals and Mg. Examples of the silicate compound containing at least one of alkali metals and Mg include potassium silicate (K₂SiO₃), sodium silicate (Na₂SiO₃: referred to also as water glass and silicate soda), lithium silicate (Li₂SiO₃), and magnesium silicate (MgSiO₃). The contents of the above elements in the insulating layer 5 are as follows. The content of Si is preferably from 10% by mass to 35% by mass inclusive, and the content of O is preferably from 20% by mass to 70% by mass inclusive. The total mass of alkali metals and Mg is preferably from 5% by mass to 30% by mass inclusive.

The insulating layer 5 may further contain Al in addition to the above silicate compound. The form of Al contained is not particularly limited. Examples of the form of Al contained include aluminum silicate and aluminates. When the insulating layer 5 contains sodium silicate and Al, good insulating properties are obtained. When the insulating layer 5 contains Al and another silicate compound such as potassium silicate, lithium silicate, or magnesium silicate, excellent heat resistance is obtained. When the insulating layer 5 contains Al, the content of Al is preferably more than 0% by mass and 20% by mass or less.

The insulating layer 5 may further contain a small amount of an element other than Si, Al, O, alkali metals, and Mg. Examples of the element other than Si, Al, O, alkali metals, and Mg include Fe and Ca. Preferably, the content of such an element is 20% by mass or less.

Other examples of the insulating layer 5 include iron phosphate, manganese phosphate, zinc phosphate, calcium phosphate, aluminum phosphate, and oxide insulating materials such as silicon oxide, titanium oxide, aluminum oxide, and zirconium oxide. When the coated metal particles 6 used are the metal particles 2 including the insulating layer 5 composed of an oxide insulating material, a dust core excellent in magnetic permeability, saturation magnetic flux density, and electrical resistance is obtained.

The composition of the insulating layer 5 can be analyzed by EDX (energy dispersive X-ray) analysis using a TEM (transmission electron microscope). The analysis is performed at five or more points in cross sections of the coated metal particles 6, and the average is used as the composition of the insulating layer 5. The cross sections of the coated metal particles 6 are obtained in the same manner as that for the cross sections of the metal particles 2 described above.

Preferably, the thickness of the insulating layer 5 is from 10 nm to 1,000 nm inclusive. When the thickness of the insulating layer 5 is 10 nm or more, its insulating properties can be improved. When the thickness is 1,000 nm or less, a reduction in the volume fraction of the metal particles 2 is prevented, and deterioration in the magnetic properties (such as saturation magnetic flux density and magnetic permeability) of the dust core can be easily prevented. More preferably, the thickness of the insulating layer 5 is from 30 nm to 300 nm inclusive. The thickness of the insulating layer 5 can be measured by observing cross sections of the coated metal particles 6 under a TEM and subjecting the observation image to image analysis.

### [2.-2 Binder resin]

The binder resin 3 included in the granulated powder 1 binds a plurality of metal particles 2 together, and the plurality of metal particles 2 can be treated as a single particle. This allows the flowability of the granulated powder 1 to be increased and its handleability to be improved.

Examples of the constituent material of the binder resin 3 includes resins that can bind a plurality of metal particles 2 together. When the granulated powder 1 is used, for example, as a constituent material of a dust core or a general structural component, it is preferable that the constituent material of the binder resin 3 is a material that disappears and does not substantially remain in the dust core or general structural component produced. The constituent material of the binder resin 3 may be at least one selected from polyvinyl alcohol, polyvinyl butyral, and acrylic resin. The composition of the binder resin 3 can be analyzed by GC-MS (gas chromatography-mass spectrometry) or FR-IR (Fourier transform infrared spectroscopy).

Preferably, the content of the binder resin 3 in the granulated powder 1 is from 0.1% by mass to 2.0% by mass inclusive. When the content of the binder resin 3 is 0.1% by mass or more, a plurality of metal particles 2 can be easily bound together.

When the content of the binder resin 3 is 2.0% by mass or less, the content of the binder resin 3 is not excessively large. The content of the binder resin 3 in the granulated powder 1 is more preferably from 0.5% by mass to 1.0% by mass inclusive. The content of the binder resin 3 can be determined and computed as the percentage of "the mass of the binder resin 3 / the mass of the granulated powder 1." The mass of the binder resin 3 can be computed as "the mass of the granulated powder 1 - the total mass of the metal particles," and the total mass of the metal particles 2 can be determined by causing the binder resin 3 in the granulated powder 1 to disappear by heat treatment or by dissolving and removing the binder resin 3 using a solvent.

### [2.-3 Thickener]

The thickener 4 included in the granulated powder 1 is contained in the binder resin 3 to increase its viscosity. The binding strength between the metal particles 2 through the binder resin 3 can thereby be increased.

The content of the thickener 4 in the binder resin 3 may be appropriately selected according to the constituent material of the thickener. For example, the content is preferably from 0.01% by mass to 50.0% by mass inclusive. When the content of the thickener 4 is 0.01% by mass or more, the viscosity of the binder resin 3 can be easily increased. When the content of the thickener 4 is 50.0% by mass or less, the amount of the binder resin 3 is not reduced excessively, and a plurality of metal particles 4 can be easily bound together.

Moreover, since the viscosity of the binder resin 3 is not increased excessively, the granulated powder 1 can be easily handled. The content of the thickener 4 in the binder resin 3 is more preferably from 0.01% by mass to 10.0% by mass inclusive and particularly preferably from 0.01% by mass to 5.0% by mass inclusive.

The constituent material of the thickener 4 may include at least one material selected from polysaccharides, layered compounds, fatty acid metal salts, and ultrafine particulate materials having a diameter of 1 µm or less. When the granulated powder 1 is used as a constituent material of, for example, a dust core or a general structural component, it is preferable that the constituent material of the thickener 4 is a material that disappears and does not substantially remain in the dust core or general structural component produced.

### [2.-3-1 Polysaccharides]

Examples of the polysaccharides include starch, pectin, guar gum, xanthan gum, tamarind gum, carrageenan, propylene glycol, and sodium carboxymethyl cellulose (CMC).

### [2.-3-2 Layered compounds]

Examples of the layered compounds include graphite, metal chalcogenides, metal oxides, metal oxyhalides, metal phosphates, clay minerals, silicates, and double hydroxides.

Examples of the metal chalcogenides include (M)(X)₂ ((M) = Ti, Zr, Hf, V, Nb, Ta, Mo, or W, and (X) = S or Se) and (M)P(X)₃ ((M) = Mg, V, Mn, Fe, Co, Ni, Zn, Cd, or In, (X) = S or Se, and P: phosphorus).

Examples of the metal oxides and the metal oxyhalides include (M)ₓ(O)_{y} (MoO₃, Mo₁₈O₅₂, V₂O₅, LiNbO₂, and LiₓV₃O₈), (M)O(X)O₄ ((M) = Ti, V, Cr, or Fe, (X) = P or As, and O: oxygen), (M)O(X) ((M) = Ti, V, Cr, or Fe, (X) = Cl or Br, and O: oxygen), (Ln)OCl ((Ln) = Yb, Er, or Tm), niobates (K[Ca₂Naₙ₋₃NbₙO₃ₙ₊₁], 3≤n<7), and titanates (K₂Ti₄O₉ and KTiNbO₅).

Examples of the metal phosphates include (M)(HPO₄)₂ ((M) = Ti, Zr, Ce, or Sn) and Zr((R)OPO₃)₂ ((R) = H, Rh, or Me: methyl group, and O: oxygen).

Examples of the clay minerals and the silicates include the smectite group (such as montmorillonite and saponite), the kaolin group (such as kaolinite), pyrophyllite-talc, vermiculite, the mica group, the brittle mica group, the chlorite group, sepiolite-palygorskite, imogolite, allophane, hisingerite, magadiite, and kanemite.

Examples of the double hydroxides include [(M²⁺)₁₋ₓ(M³⁺)ₓ(OH)₂][Aⁿ⁻]_{x/n}·zH₂O ((M²⁺) = Mg, or Zn, and (M³⁺) = Al or Fe).

### [2.-3-3 Fatty acid metal salts]

Examples of the fatty acid metal salts include fatty acid metal salts composed of fatty acids and metals and mixtures thereof (complexes). Examples of the fatty acids include caprylic acid, pelargonic acid, capric acid, undecanoic acid, lauric acid, tridecanoic acid, myristic acid, pentadecanoic acid, palmitic acid, margaric acid, stearic acid, nonadecanoic acid, arachic acid, heneicosanoic acid, behenic acid, tricosanoic acid, lignoceric acid, pentacosanoic acid, cerotic acid, heptacosanoic acid, and montanic acid. Examples of the metals include Mg, Ca, Zn, Al, Ba, Li, Sr, Cd, Pb, Na, and K.

### [2.-3-4 Ultrafine particulate materials]

Examples of the ultrafine particles having a diameter of 1 µm or less include particles formed of inorganic materials such as metal particles, ceramic particles, and carbon nanotubes. Examples of the metal particles include Au, Ag, and Pt particles. Examples of the ceramic particles include SiO₂, Al₂O₃, and CaCO₃ particles. Smaller ultrafine particles are preferred. Ultrafine particles of 100 nm or less are preferable, and ultrafine particles of 30 nm or less are more preferable. Among the above ultrafine particles, ceramic particles having high electrical resistance are preferably used when the granulated powder is used to manufacture a constituent material of a high-frequency magnetic core, because deterioration in insulating properties of the dust core (powder compact) can be prevented. The ultrafine particulate material does not disappear but remains when the compact formed by compression molding of the granulated powder 1 is subjected to heat treatment.

The composition of the thickener can be analyzed by SEM-EDX (energy dispersive X-ray spectroscopy), XRD (X-ray diffraction method), GC-MS, FT-IR, etc. The content of the thickener can be determined by measuring its concentration by SEM image analysis.

### [2.-4 Average grain size of granulated powder]

Preferably, the average grain size of the granulated powder 1 is from 100 µm to 1,000 µm inclusive. When the average grain size of the granulated powder 1 is 100 µm or more, excellent flowability is obtained, and productivity can be improved. When the average grain size of the granulated powder 1 is 1,000 µm or less, the granulated powder 1 can be easily handled. The average grain size of the granulated powder 1 is more preferably from 150 µm to 500 µm inclusive. The average grain size is a value at a cumulative percentage of 50% cumulated from the small grain side (D50: 50 vol.% grain size) in a volume-based grain size distribution measured using a laser diffraction-type particle size distribution analyzer.

In the granulated powder 1 according to the present disclosure, the binding strength between the plurality of metal particles 2 is high. Therefore, the metal particles are unlikely to be disaggregated, and excellent flowability is obtained. This is because, since the binder resin 3 contains the thickener 4, the viscosity of the binder resin 3 is increased. In particular, metal particles (particularly, iron or iron alloy particles) having a large specific gravity and metal particles having a large particle diameter are not easily bound together using only the binder resin 3. Even when the plurality of metal particles 2 included in the granulated powder 1 are such metal particles, high binding strength and high flowability can be obtained because the viscosity of the binder resin 3 containing the thickener 4 can be easily increased. Since the flowability is high, fillability into a molding die used for manufacturing a dust core or a general structural component is high, so that the productivity when the dust core or the general structural component is manufactured can be improved. Therefore, the granulated powder can be preferably used as constituent materials of dust cores and general structural components.

### [3. Method for manufacturing granulated powder]

The granulated powder can be manufactured by a granulated powder manufacturing method including a granulating step of granulating a plurality of metal particles using the binder resin. First, a preparing step of preparing constituent materials of the granulated powder will be described, and then the granulating step will be described.

### [3.-1 Preparing step]

In the preparing step, the plurality of metal particles and a solution containing the binder resin and the thickener are prepared. The metal particles prepared may be purchased commercial metal particles formed from any of the above described materials and having the above described average particle diameter or may be metal particles manufactured using a known manufacturing method. To prepare the solution, the binder resin, the thickener, and a solvent are prepared, and the solutes and the solvent are mixed such that the contents of the binder resin and the thickener with respect to the amount of the solution are prescribed values. The contents of the binder resin and the thickener in the solution may be appropriately selected according to the types of the resin and the thickener.

Examples of the material of the solvent include water.

### [3.-2 Granulating step]

In the granulating step, the plurality of metal particles are rotated and tumbled under heating, and the solution containing the binder resin is splayed onto the plurality of tumbling metal particles. After the sprayed solution adheres to the surface of the metal particles, the solvent of the adhering the solution is rapidly removed by drying under heating. The plurality of metal particles are granulated with the binder resin, and the granulated powder can thereby be manufactured. In the granulating step, a commercial tumbling fluidized bed granulator may be used.

Preferably, the temperature of the metal particles is from 30°C to 150°C inclusive. When the temperature of the particles is 30°C or higher, the solution adhering to the surface of the metal particles can be easily and rapidly dried. When the temperature of the particles is 150°C or lower, the binder resin 3 is unlikely to thermally deteriorate. The temperature of the particles is more preferably from 30°C to 100°C inclusive and particularly preferably from 30°C to 70°C inclusive. Preferably, the number of revolutions during tumbling is from 50 rpm to 1,000 rpm inclusive. When the number of revolutions is within the above range, the sprayed solution can easily adhere to the plurality of metal particles uniformly. The number of revolutions during tumbling is more preferably from 50 rpm to 500 rpm inclusive and particularly preferably from 100 rpm to 300 rpm inclusive. Preferably, the treatment time is from 10 minutes to 300 minutes inclusive. When the treatment time is 10 minutes or longer, a plurality of metal particles can be bound together sufficiently, and a granulated powder having a large grain size can be produced easily. When the treatment time is 300 minutes or shorter, a granulated powder having a grain size that allows the powder to be easily handled is easily produced. The treatment time is more preferably from 10 minutes to 120 minutes inclusive and particularly preferably from 10 minutes to 60 minutes inclusive.

With the above granulated powder manufacturing method, a granulated powder that contains a plurality of metal particles bound with high binding strength and has excellent flowability can be manufactured because the binder resin contains the thickener. In particular, metal particles (particularly, iron or iron alloy particles) having a large specific gravity and metal particles having a large particle diameter are not easily bound together using only the binder resin. Even when the metal particles used are such metal particles, a granulated powder that contains the metal particles bound together with sufficiently high binding strength and has excellent flowability can be manufactured because the viscosity of the binder resin containing the thickener can be easily increased.

### [4 Test Examples]

Granulated powder samples each including a plurality of metal particles and a binder resin were produced, and the flowability of each granulated powder was evaluated.

### [4.-1 Sample No. 1-1]

A granulated powder sample No. 1-1 was produced through the preparing step and the granulating step in the same manner as in the above-described granulated powder manufacturing method.

### [4.-1-1 Preparing step]

A plurality of metal particles and a solution containing a binder resin were prepared. The plurality of metal particles prepared were a plurality of particles composed of an Fe-Si-Al-based alloy (9.5% by mass of Si and 5.5% by mass of Al, with the balance being Fe and unavoidable impurities). The average particle diameter of the metal particles was 30 µm. The average particle diameter is a value at a cumulative percentage of 50% cumulated from the small diameter side (D50: 50 vol.% particle diameter) in a volume-based particle size distribution measured using a laser diffraction-type particle size distribution analyzer.

The above solution was prepared by adding 0.5% by mass of xanthan gum (polysaccharide) used as the thickener to an aqueous PVA solution (concentration: 10% by mass) diluted with water.

### [4.-1-2 Granulating step]

The plurality of metal particles were granulated with the binder resin. In this case, the plurality of metal particles were rotated and tumbled under heating using a commercial tumbling fluidized bed granulator (Granurex GX-20 manufactured by Freund Corporation), and the solution was sprayed onto the plurality of tumbling metal particles. The temperature of the metal particles in the fluidized bed granulator, the number of revolutions of a rotating plate, and time are shown below. The above solution was added such that the solid content of the aqueous solution was 0.9% by mass with respect to the mass of the plurality of metal particles. The average grain size of the granulated powder obtained is shown in Table 1. The average grain size is the D50 grain size, as in the case of the average particle diameter of the metal particles described above.
Temperature of metal particles: 50°C
Number of revolutions: 300 rpm
Time: 60 minutes

### [4.-2 Sample No. 1-101]

A granulated powder sample No. 1-101 was produced in the same manner as that for sample No. 1-1 except that the solution prepared in the preparing step contained no thickener.

### [4.-3 Flowability evaluation]

The flowability of each sample was evaluated. The results are shown in Table 1. In this case, whether the flowability of the granulated powder was "Good" or "Bad" was evaluated by determining whether or not the granulated powder could be ejected from a φ4 mm funnel.

**[Table 1]**

| Sample No. | Binder resin | Granulated powder | |
|---|---|---|---|
| | Thickener | Average grain size D50 (µm) | Flowability |
| | Material | | |
| 1-1 | Xanthan gum | 195 | Good |
| 1-101 | - | 140 | Bad |

As shown in Table 1, the average grain size of sample No. 1-1 including the binder resin containing the thickener was 195 µm, and the flowability was Good. The average grain size of sample No. 1-101 including the binder resin containing no thickener was 140 µm, and the flowability was Bad. This shows that, when the binder resin contains the thickener, a granulated powder having a relatively large grain size can be manufactured and the granulated powder manufactured is excellent in flowability.

It should be understood that the embodiments disclosed herein are illustrative in all aspects and non-restrictive in every respect. The scope of the present invention is defined not by the above description but by the scope of the claims. It is intended that the present invention includes all modifications which fall within the scope and meanings equivalent to the scope of the claims.

### Reference Signs List

- 1: granulated powder
- 2: metal particles
- 3: binder resin
- 4: thickener
- 5: insulating layer
- 6: coated metal particles

## Claims

1. A granulated powder comprising:
a plurality of metal particles;
a binder resin for binding the plurality of metal particles together; and
a thickener that is contained in the binder resin and increases the viscosity of the binder resin.

2. The granulated powder according to claim 1, wherein the metal particles have an average particle diameter of 10 µm or more.

3. The granulated powder according to claim 1 or 2, wherein a constituent material of the metal particles is a material having a specific gravity equal to or larger than the specific gravity of magnesium.

4. The granulated powder according to any one of claims 1 to 3, wherein the thickener includes at least one material selected from polysaccharides, layered compounds, fatty acid metal salts, and ultrafine particulate materials having a diameter of 1 µm or less.

5. The granulated powder according to any one of claims 1 to 4, wherein the content of the binder resin with respect to the mass of the granulated powder is from 0.1% by mass to 2.0% by mass inclusive.

6. The granulated powder according to claim 5, wherein the content of the thickener with respect to the mass of the binder resin is from 0.01% by mass to 50.0% by mass inclusive.

7. The granulated powder according to any one of claims 1 to 6, wherein the binder resin is one selected from polyvinyl alcohol, polyvinyl butyral, and acrylic resin.

8. The granulated powder according to any one of claims 1 to 7, further comprising an insulating layer that externally covers each of the metal particles.

9. A method for manufacturing a granulated powder, the method comprising
a granulating step of granulating a plurality of metal particles using a binder resin,
wherein the binder resin contains a thickener that increases the viscosity of the binder resin, and
wherein, in the granulating step, the plurality of metal particles are rotated and tumbled under heating, and a solution containing the binder resin is sprayed onto the plurality of tumbling metal particles.

10. The method for manufacturing a granulated powder according to claim 9, wherein, in the granulating step, the temperature of the metal particles is from 30°C to 150°C inclusive, the number of revolutions is from 50 rpm to 1,000 rpm inclusive, and time is from 10 minutes to 300 minutes inclusive.
